# EUROPÄISCHE PATENTSCHRIFT

(11) **EP 2 988 183 B1**
(45) Veröffentlichungstag und Bekanntmachung des Hinweises auf die Patenterteilung: **01.04.2020**
(21) Anmeldenummer: 14196800.8
(22) Anmeldetag: 08.12.2014
(51) Int. Cl.: G05B 19/05, G06F 9/50, H04L 12/00, H02J 13/00, G08C 17/02

(54) **SYSTEM ZUM BEOBACHTEN UND/ODER STEUERN EINER ANLAGE**
SYSTEM FOR OBSERVING AND/OR CONTROLLING A PLANT
SYSTÈME D'OBSERVATION ET/OU DE COMMANDE D'UNE INSTALLATION

(30) Priorität: 14.08.2014 WO PCT/EP2014/067409
(43) Veröffentlichungstag der Anmeldung: 24.02.2016
(73) Patentinhaber: Siemens Aktiengesellschaft, 80333 München (DE)
(72) Erfinder: Fröhner, Wiebke, 92224 Amberg (DE); Werner, Thomas, 91126 Rednitzhembach (DE)

(56) Entgegenhaltungen:
- EP-A1- 2 293 164
- US-A1- 2010 013 632

## Beschreibung

System zum Beobachten und/oder Steuern einer Anlage Die Erfindung betrifft ein System zum Beobachten und/oder Steuern einer Anlage, wobei das System mit einer Fernwirkanordnung, mit Feldgeräten der Anlage und mit einer Leitstellenanordnung eingerichtet ist.

Beim automatisierten Betrieb von Anlagen werden üblicherweise sogenannte Feldgeräte, Leitstellenanordnungen und Fernwirkanordnungen eingesetzt. Unter einer Anlage kann in diesem Zusammenhang jede Form einer industriellen Anlage verstanden werden, z.B. eine elektrische Anlage, wie eine elektrische Schaltstation oder ein elektrisches Energieversorgungsnetz, eine Anlage zum Transport oder zur Verteilung von Feststoffen, Gas oder Flüssigkeiten oder aber auch eine chemische oder verfahrenstechnische Prozessanlage oder eine Produktionsanlage. Nachfolgend wird die Erfindung lediglich beispielhaft anhand einer elektrischen Anlage erläutert. Eine solche elektrische Anlage umfasst einzelne Komponenten, beispielsweise in Form von Leitungen und Kabeln, Schaltern, Transformatoren, Generatoren, Motoren, Umrichtern, Lasten, elektrischen Energieerzeugern etc.

Feldgeräte sind üblicherweise in räumlicher Nähe zu einzelnen Komponenten der Anlage angeordnet und dienen beispielsweise dazu, Messwerte zu erfassen, die einen Zustand der jeweiligen Komponenten der Anlage beschreiben, oder Zustände jeweiliger Komponenten der Anlage zu beeinflussen. In diesem Zusammenhang können Feldgeräte beispielsweise Sensoren, z.B. Sensoren zur Messung elektrischer Größen (z.B. Strom, Spannung), Temperatursensoren, Durchflusssensoren, Strömungssensoren etc., oder Aktoren, z.B. Stellglieder, Schaltersteuerungen, Ventile etc., sein. Feldgeräte können darüber hinaus auch intelligente Geräte (z.B. sogenannte IEDs - intelligent electronic devices) sein, die unter Ausführung bestimmter Algorithmen selbständig Aufgaben zur Automatisierung der Anlage wahrnehmen (z.B. sogenannte Fehlerindikatoren, die einen in einer Leitung fließenden Strom messen und bei Überschreitung eines Schwellenwertes ein Alarmsignal abgeben). IEDs können in diesem Zusammenhang insbesondere Schutz- und Steuergeräte, Messgeräte, Power Quality Geräte oder Leistungsmessgeräte (Power Meter) sein.

Leitstellenanordnungen sind einzelne oder Gruppen von zentral oder dezentral angeordneten Datenverarbeitungseinrichtungen, die meist komplexe Algorithmen zur Beobachtung und/oder zur Steuerung der Anlage ausführen. Leitstellenanordnungen besitzen üblicherweise eine Mensch-Maschine-Schnittstelle, die es einem Betreiber der Anlage ermöglicht, den Zustand der Anlage insgesamt sowie denjenigen der einzelnen Komponenten der Anlage zu beobachten und zu überwachen und steuernd auf einzelne oder mehrere Komponenten einzuwirken.

Fernwirkanordnungen stellen quasi ein Bindeglied zwischen einer Mehrzahl von Feldgeräten und einer Leitstellenanordnung dar und stehen dafür sowohl mit der Leitstellenanordnung als auch mit den Feldgeräten in Kommunikationsverbindung. Beispielsweise können Messwerte mehrerer Feldgeräte mittels einer Fernwirkanordnung gesammelt und an eine Leitstellenanordnung weitergeleitet werden. In entsprechender Weise können von der Leitstellenanordnung ausgelöste Steuerbefehle über die Fernwirkanordnung an die betreffenden Feldgeräte weitergeleitet werden.

Fernwirkanordnungen stellen in diesem Zusammenhang lokale Kommunikations- und Steuergeräte dar, welche die von Sensoren übermittelten Information sammeln und an die Leitstellenanordnung weiterleiten, einfache lokale Steuerfunktionen übernehmen und/oder Sollwerte und Steuerungsbefehle an Aktoren weitergeben. Diese lokalen Fernwirkanordnungen sind üblicherweise mit geeigneten Kommunikationsmodulen (z.B. Switche, Hubs, Router, Modems Kommunikationskoppler) verbunden, um Informationen gemäß speziellen Fernwirkprotokollen (z.B. IEC 60870-5-101/-104) mit der Leitstellenanordnung auszutauschen.

Dabei verwenden sie entweder öffentliche Kommunikationsnetze (z.B. Mobilfunk- oder DSL-Netze) oder private Kommunikationsnetze (z.B. drahtgebundene Kommunikationsbusse oder Glasfasernetze). Die Feldgeräte (z.B. Sensoren, Aktoren) werden üblicherweise über elektrische Leitungen (analog oder digital) oder spezielle Bussysteme (z.B. IEC 60870-5-103, Profibus, Modbus etc.) an die Fernwirkanordnungen angeschlossen.

Fernwirkanordnungen sind beispielsweise aus der deutschen Offenlegungsschrift DE 10 2007 004 943 A1 bekannt. Die dort als "Anlagenverarbeitungseinrichtungen" bzw. "Steuer- / Regeleinrichtungen" bezeichneten Fernwirkanordnungen dienen zur Verbindung von Sensoranordnungen und einer Leitstellenanordnung in Form einer zentralen Datenverarbeitungseinrichtung. Der Aufsatz "The Handle of Substation Remote Terminal Unit Configuration"; I. Dmitrenko, J. Laugis, erschienen im Scientific Journal of Riga Technical University: Power and Electrical Engineering, Volume 27, 2010, zeigt eine Fernwirkanordnung in Form einer sogenannten "Remote Terminal Unit", die einerseits mit IEDs oder Sensoren/Aktoren und andererseits mit einer Leitstellenanordnung in Form eines SCADA-Systems (SCADA: "Supervisory Control and Data Acquisition") verbunden ist. Der Aufsatz "The Design and Development of DSP Based Ring Main Unit FTU (Feeder Automation Terminal Unit) in Intelligent Distribution"; H. Zhou, X. Luo, Q. Deng, erschienen als Konferenzbeitrag der International Conference on Electrical and Control Engineering im Jahr 2010, beschreibt eine hinsichtlich ihrer Konstruktion und Programmierung spezifisch auf den Betrieb zur Automatisierung von Abzweigen in elektrischen Verteilnetzen ausgelegte Fernwirkanordnung. Schließlich ist aus der internationalen Patentanmeldung WO 2012/028186 A1 eine Fernwirkanordnung in Form eines erweiterten Kommunikationsgerätes bekannt, in das beliebige Applikationsprogramme zur Übernahme von Automatisierungsfunktionen installierbar sind.

Bei allen bekannten Fernwirkanordnungen handelt es sich um speziell auf den jeweiligen Einsatzzweck ausgebildete lokale Geräte, die eine bestimmte Konstruktion mit einer funktionsspezifischen Programmierung verbinden, um einen im Voraus definierten Einsatzzweck zu erfüllen. Der Aufwand für Konfiguration und Gerätepflege (z.B. Aktualisierung von Programmierungen, Ertüchtigung für den Anschluss weiterer Feldgeräte) ist vergleichsweise hoch.

Aus der EP 2 293 164 A1 ist ein Prozessbeobachtungssystem bekannt, bei dem SCADA-Funktionen in einem Cloud-Computersystem ausgeführt werden.

Die US 2010/0013632 A1 beschreibt eine Übertragungsschnittstelle zum Filtern von Daten eines elektrischen Energieübertragungssystems.

Der Erfindung liegt die Aufgabe zugrunde, ein im Vergleich zu den bekannten Fernwirkanordnungen flexibleres System mit einer Fernwirkanordnung anzugeben, die sich mit geringerem Aufwand an geänderte Einsatzzwecke anpassen lässt.

Diese Aufgabe wird erfindungsgemäß durch ein System der eingangs genannten Art gelöst, wobei die Fernwirkanordnung in einer Datenverarbeitungs-Cloud ausgebildet ist, wobei die Fernwirkanordnung dazu ausgebildet ist, mit den Feldgeräten feldgerätespezifische Nachrichten und mit der Leitstellenanordnung leitstellenspezifische Nachrichten auszutauschen und die Fernwirkanordnung dazu ausgebildet ist, von den Feldgeräten empfangene feldgerätespezifische Nachrichten in leitstellenspezifische Nachrichten umzusetzen und an die Leitstellenanordnung zu übertragen, und von der Leitstellenanordnung empfangene leitstellenspezifische Nachrichten in feldgerätespezifische Nachrichten umzusetzen und an die Feldgeräte zu übertragen.

Unter einer Datenverarbeitungs-Cloud soll hierbei eine Anordnung mit einer oder mehreren Datenspeichereinrichtungen und einer oder mehreren Datenverarbeitungseinrichtungen verstanden werden, die durch geeignete Programmierung zur Durchführung beliebiger Datenverarbeitungsprozesse ausgebildet werden kann. Die Datenverarbeitungseinrichtungen stellen hierbei in der Regel universelle Datenverarbeitungseinrichtungen (z.B. Server) dar, die hinsichtlich ihrer Konstruktion und ihrer Programmierung zunächst keinerlei spezifische Auslegung aufweisen. Erst durch eine vorgenommene Programmierung lässt sich die universelle Datenverarbeitungseinrichtung zur Ausführung spezifischer Funktionen ertüchtigen. Sofern die Datenverarbeitungs-Cloud mehrere einzelne Komponenten aufweist, sind diese auf geeignete Weise zur Datenkommunikation miteinander verbunden (z.B. durch ein Kommunikationsnetzwerk). Einer Datenverarbeitungs-Cloud können beliebige Daten zur Datenspeicherung und/oder -verarbeitung zugeführt werden. Die Datenverarbeitungs-Cloud selbst stellt die gespeicherten Daten und/oder die Ergebnisse der durchgeführten Datenverarbeitung wiederum anderen Geräten, z.B. einer mit der Datenverarbeitungs-Cloud verbundenen Computer-Arbeitsstation (Workstation), zur Verfügung. Eine Datenverarbeitungs-Cloud kann beispielsweise durch ein Rechenzentrum oder auch mehrere vernetzte Rechenzentren bereitgestellt werden. Üblicherweise ist eine Datenverarbeitungs-Cloud räumlich entfernt von der Anlage ausgebildet.

Bei dem erfindungsgemäßen System tritt die Datenverarbeitungs-Cloud quasi an die Stelle der bisher als spezifisches Fernwirkgerät ausgebildeten Fernwirkanordnung. Hierdurch lässt sich einerseits eine flexiblere Anpassung der Fernwirkanordnung an die - sich ggf. ändernden - Erfordernisse der Anlage erreichen. Beispielsweise kann durch Bereitstellung von entsprechend mehr Speicherplatz und Rechenleistung der Datenverarbeitungs-Cloud eine Anpassung an eine gestiegene Anzahl von Feldgeräten oder eine erhöhte Datenmenge, die von den Feldgeräten bereitgestellt wird, erfolgen. Durch das Vorhalten der Fernwirkanordnung als Teil der Datenverarbeitungs-Cloud lassen sich zudem auch Wartung und Pflege, die zuvor lokal an den Fernwirkgeräten vorgenommen werden musste, einfacher durchführen. Beispielsweise kann eine Aktualisierung einer für den Betrieb der Fernwirkanordnung benötigten Software einfacher vorgenommen werden, da diese unter Nutzung der in der Datenverarbeitungs-Cloud ohnehin vorhandener Rechenkapazitäten und Ressourcen (Kommunikationsnetzwerke etc.) vorgenommen werden kann. Die Leitstellenanordnung kann hierbei als separate Einrichtung, beispielsweise als eine oder mehrere Datenverarbeitungseinrichtungen in einer Netzleitstelle bzw. einem Kontrollzentrum der Anlage, ausgebildet sein. Es ist jedoch auch möglich, die Funktionen der Leitstellenanordnung auf derselben Rechenplattform auszuführen wie die Fernwirkanordnung, also beispielsweise in derselben oder einer benachbarten Datenverarbeitungs-Cloud. In diesem Fall wird die Schnittstelle zum Betreiber der Anlage durch einfache Arbeitsplatzcomputer oder mobile Recheneinrichtungen (Laptops, Tablet-Computer, Smartphones und andere tragbare Recheneinrichtungen) dargestellt, während die komplexen Algorithmen der Leitstellenanordnung durch die Datenverarbeitungs-Cloud gebildet werden.

Zur Gewährleistung der Sicherheit der zwischen der Fernwirkanordnung, den Feldgeräten und der Leitstellenanordnung durchgeführten Kommunikation können an sich bekannte Verschlüsselungsverfahren und Authentifizierungsverfahren verwendet werden. Diese können beispielsweise auf dem Austausch von Schlüsseln und/oder Zertifikaten beruhen. Auch können alle auf der Fernwirkanordnung gespeicherten Daten in verschlüsselter Form vorliegen.

Erfindungsgemäß ist vorgesehen, dass die Fernwirkanordnung dazu ausgebildet ist, mit den Feldgeräten feldgerätespezifische Nachrichten und mit der Leitstellenanordnung leitstellenspezifische Nachrichten auszutauschen, und die Fernwirkanordnung dazu ausgebildet ist, von den Feldgeräten empfangene feldgerätespezifische Nachrichten in leitstellenspezifische Nachrichten umzusetzen und an die Leitstellenanordnung zu übertragen, und von der Leitstellenanordnung empfangene leitstellenspezifische Nachrichten in feldgerätespezifische Nachrichten umzusetzen und an die Feldgeräte zu übertragen.

Dadurch nimmt die Fernwirkanordnung quasi die Aufgaben eines Kommunikationsgateways war und ermöglicht eine nahtlose Kommunikation zwischen der Leitstellenanordnung und den Feldgeräten der Anlage. Aus Sicht der Leitstellenanordnung bzw. der Feldgeräte verhält sich die erfindungsgemäße Fernwirkanordnung in vorteilhafter Weise wie ein bisheriges Fernwirkgerät, so dass aufgrund der Verwendung der erfindungsgemäßen Fernwirkanordnung keinerlei Anpassungen auf Seiten der Leitstellenanordnung bzw. der Feldgeräte vorgenommen werden müssen.

Feldgerätespezifische Nachrichten sind solche Nachrichten, die zum Betrieb der Feldgeräte benötigt oder im Zuge ihres Betriebs erzeugt und die zwischen der Fernwirkanordnung und den Feldgeräten ausgetauscht werden. Beispielsweise stellen Nachrichten, die von den Feldgeräten erfasste Messwerte enthalten, feldgerätespezifische Nachrichten dar. Weitere Beispiele für feldgerätespezifische Nachrichten sind einerseits von den Feldgeräten erzeugte Meldungen, Alarme, Ereignis- und/oder Statusinformationen, Nachrichten mit von Messwerten abgeleiteten Werten etc., und andererseits an die Feldgeräte übermittelte Befehle, Sollwerte, Parametereinstellungen und Steuerkommandos etc.

Leitstellenspezifische Nachrichten sind solche Nachrichten, die zum Betrieb der Leitstellenanordnung benötigt oder im Zuge ihres Betriebs erzeugt und die zwischen der Fernwirkanordnung und der Leitstellenanordnung ausgetauscht werden. Beispielsweise stellen Nachrichten, die von der Leitstellenanordnung erzeugte Steuerkommandos enthalten, leitstellenspezifische Nachrichten dar. Weitere Beispiele für leitstellenspezifische Nachrichten sind einerseits von der Leitstellenanordnung erzeugte Befehle, Sollwerte, Parametereinstellungen etc., und andererseits an die Leitstellenanordnung übermittelte Meldungen, Alarme, Ereignis- und/oder Statusinformationen und Nachrichten mit Messwerten oder von Messwerten abgeleiteten Werten etc.

Eine vorteilhafte Ausführungsform des erfindungsgemäßen Systems sieht in diesem Zusammenhang vor, dass die Fernwirkanordnung dazu ausgebildet ist, mit den Feldgeräten die feldgerätespezifischen Nachrichten gemäß zumindest einem ersten Kommunikationsprotokoll, das von den Feldgeräten unterstützt wird, und mit der Leitstellenanordnung die leitstellenspezifischen Nachrichten gemäß einem zweiten Kommunikationsprotokoll, das von der Leitstellenanordnung unterstützt wird, auszutauschen.

Hierdurch wird zum Einen erreicht, dass die Leitstellenanordnung und die Feldgeräte die von ihnen ohnehin unterstützten Kommunikationsprotokolle auch bei Verwendung der erfindungsgemäßen Fernwirkanordnung weiterverwenden können. Zum Anderen kann eine Anpassung an seitens der Leitstellenanordnung und/oder der Feldgeräte geänderte Kommunikationsprotokolle leicht durch entsprechende Aktualisierung der Programmierung der Fernwirkanordnung in der Datenverarbeitungs-Cloud vorgenommen werden. Auch für den Fall, dass seitens der Feldgeräte kein einheitliches Kommunikationsprotokoll verwendet wird, kann durch Verwendung der erfindungsgemäßen Fernwirkanordnung eine deutlich flexiblere Anpassung an solche unterschiedlichen Kommunikationsprotokolle stattfinden, als dies bei bisherigen Fernwirkgeräten möglich gewesen wäre. Die Kommunikation von Feldgeräten, wie Sensoren und Aktoren, ist bisher nämlich noch nicht einheitlich genormt, so dass mit steigender Anzahl von Feldgeräten auch eine größere Anzahl unterschiedlicher unterstützter Kommunikationsprotokolle einhergehen kann. Da erwartet wird, dass die Anzahl von Feldgeräten in einer Anlage tendenziell eher zunimmt, kann durch Verwendung der erfindungsgemäßen Fernwirkanordnung auch eine flexiblere Auswahl von Feldgeräten der Anlage erfolgen, da die Anpassung an die benötigten Kommunikationsprotokolle in der erfindungsgemäßen Fernwirkanordnung leicht vorgenommen werden kann. Bisherige lokale Fernwirkgeräte sind hingegen nicht dazu ausgelegt, mit einer sehr großen und zudem veränderlichen Anzahl an Feldgeräten zu kommunizieren. Auch ein direkter Anschluss der Vielzahl von Feldgeräten an die Leitstellenanordnung ist heutzutage nicht ohne größere Anpassungen auf Seiten der Leitstellenanordnung möglich, da die im Betrieb stehenden Leitstellenanordnungen implizit voraussetzen, dass die vielen verschiedenen von den Feldgeräten ausgesendeten Informationen von vor ihrer Weiterleitung an die Leitstellenanordnung gesammelt, verdichtet und aufbereitet werden. Hier ermöglicht die erfindungsgemäße Fernwirkanordnung eine einfache Nachrüstung bestehender Anlagen, da insbesondere auf Seiten der Leitstellenanordnung keine Anpassung erfolgen muss, weil sich die erfindungsgemäße Fernwirkanordnung gegenüber der Leitstellenanordnung wie ein herkömmliches Fernwirkgerät verhält. Gleichzeitig stellt sie auf Seiten der Feldgeräte die erforderliche Skalierbarkeit von Schnittstellen, bereitgestellten Kommunikationsprotokollen, Rechenkapazität und Datenspeicherplatz zur Verfügung, um Feldgeräte beliebigen Typs und von beliebiger Anzahl anschließen zu können.

Gemäß einer weiteren vorteilhaften Ausführungsform des erfindungsgemäßen Systems ist vorgesehen, dass die Fernwirkanordnung eine gemeinsame Kommunikationsschnittstelle sowohl für die Kommunikation mit den Feldgeräten als auch für die Kommunikation mit der Leitstellenanordnung aufweist.

In diesem Zusammenhang kann beispielsweise vorgesehen sein, dass die gemeinsame Schnittstelle durch eine oder mehrere physikalische Kommunikationsschnittstellen (z.B. Ethernet-schnittstellen) gebildet ist, die einen Anschluss sowohl an die Feldgeräte als auch die Leitstellenanordnung ermöglicht. In diesem Fall können die Feldgeräte, die Fernwirkanordnung und die Leitstellenanordnung beispielsweise über eine oftmals bereits vorhandene Kommunikationsinfrastruktur in Form eines LAN (local area network), eines WAN (wide area network), eines Intranets, des Internets oder einer Kombination aus den genannten Netzwerken stattfinden.

Eine weitere vorteilhafte Ausführungsform des erfindungsgemäßen Systems sieht vor, dass das zumindest eine erste Kommunikationsprotokoll auf einem IP-basierten Übermittlung-Kommunikationsprotokoll aufsetzt und die Fernwirkanordnung dazu ausgebildet ist, die Kommunikation mit den Feldgeräten über den Feldgeräten jeweils individuell fest vorgegebene Kommunikationsadressen vorzunehmen.

Diese Ausführungsform macht sich insbesondere die Möglichkeiten zunutze, die durch den geänderten IP-Standard IPv6 zur Übertragung von Daten in paketvermittelten Netzwerken, insbesondere dem Internet, bereitgestellt werden. Gemäß dem IPv6 Standard wird nämlich ein Adressraum geschaffen, der eine Anzahl von 3,4·10³⁸ einzelnen Adressen zur Verfügung stellt. Hierdurch wird das sogenannte "Internet der Dinge" ermöglicht, bei dem jedem kommunikationsfähigen Gerät eine eigene IP-Adresse individuell fest vorgegeben wird, so dass dieses Gerät, beispielsweise ein Feldgerät, individuell im Internet bzw. einem IP-basierten Netzwerk angesprochen und erkannt werden kann. Dabei können die einzelnen Geräte durchaus unterschiedliche Applikations-Kommunikationsprotokolle bzw. Transport-Kommunikationsprotokolle (z.B. Modbus TCP, ZigBee IP, Bluetooth, IEC 61850 XMPP) verwenden, die zur Übertragung im Netzwerk effektiv auf dem IP-Protokoll aufsetzen. Die erfindungsgemäße Fernwirkanordnung stellt die erforderliche Flexibilität und Skalierbarkeit zur Verfügung, mit solchen einzeln adressierbaren Feldgeräten kommunizieren zu können; eine aufwendige Anpassung der Leitstellenanordnung ist hingegen nicht erforderlich, weil die Fernwirkanordnung mit der Leitstellenanordnung weiterhin über ein einheitliches Kommunikationsprotokoll kommuniziert.

Konkret kann beispielsweise vorgesehen sein, dass das zweite Kommunikationsprotokoll ein Fernwirkprotokoll (z.B. gemäß IEC 60870-5-101/-104, IEC 61850, DNP3i) ist. Hierbei kann auch das verwendete Fernwirkprotokoll zur Datenübermittlung auf dem IP-Standard aufsetzen. Hierdurch wird beispielsweise ermöglicht, dass die Leitstellenanordnung mit demselben Kommunikationsprotokoll mit der Fernwirkanordnung kommuniziert, das sie auch für eine Kommunikation mit einem lokalen Fernwirkgerät verwenden würde.

Gemäß einer weiteren vorteilhaften Ausführungsform des erfindungsgemäßen Systems ist vorgesehen, dass die Fernwirkanordnung ein Applikationsmodul aufweist, das zur Verarbeitung von empfangenen feldgerätespezifischen Nachrichten gemäß vorgegebenen Regeln und zur Bildung von leitstellenspezifischen Nachrichten und/oder weiteren feldgerätespezifischen Nachrichten mit einem von einem Ergebnis der Verarbeitung abhängigen Inhalt eingerichtet ist.

Das Applikationsmodul kann hierbei beispielsweise ein oder mehrere Programme aufweisen, die auf der Datenverarbeitungs-Cloud ausgeführt werden und eine programmgemäße Verarbeitung der feldgerätespezifischen Nachrichten vornehmen. Die Programmierung kann hierbei über beliebige Programmiersprachen erfolgen, beispielsweise über Programmlisten oder sogenannte CFC-Pläne (CFC: Continuous Function Chart).

Beispielsweise kann vorgesehen sein, dass mit dem Applikationsmodul ein Programm ausgeführt wird, das eine Verarbeitung in Form einer Verdichtung von in feldgerätespezifischen Nachrichten enthaltenen Messwerten vornimmt, beispielsweise durch Mittelwertbildung, Zeigermesswertbildung (Bildung sogenannter Phasoren) oder RMS-Wert Bildung (RMS: root-mean-square) und mit den verdichteten Messwerten leitstellenspezifische Nachrichten bildet und diese an die Leitstellenanordnung zur Anzeige und/oder Auswertung weiterleitet. Eine weitere Möglichkeit zur Verdichtung von Messwerten besteht darin, nur solche Messwerte zur Bildung von leitstellenspezifischen Nachrichten zu verwenden, die eine signifikante Abweichung (z.B. Änderung um mehr als 5%) von vorangehenden Messwerten angeben. In diesem Fall führt die Fernwirkanordnung folglich die Funktionen eines Datenverdichters oder Datenkonzentrators durch.

Eine andere Möglichkeit der Verarbeitung durch die Fernwirkanordnung besteht darin, dass die in den feldgerätespezifischen Nachrichten enthaltenen Daten (z.B. Messwerte) zeitlich mit Daten anderer Feldgeräte in Bezug gesetzt werden und die auf diese Weise zeitlich aufeinander bezogenen Daten in leitstellenspezifische Nachrichten eingebunden und an die Leitstellenanordnung übermittelt werden.

Eine weitere Möglichkeit der Verarbeitung durch die Fernwirkanordnung besteht darin, dass die in den feldgerätespezifischen Nachrichten enthaltenen Daten nach vorgegebenen Regeln dahingehend ausgewertet werden, ob sie einen Fehler oder eine Störung des Betriebsablaufs der Anlage anzeigen. Das Ergebnis der Auswertung (z.B. Überschreitung eines Schwellenwertes eines Stromes oder einer Temperatur) kann daraufhin zur Erzeugung eines Steuerkommandos verwendet werden, um eine Aktion bei einem oder mehreren der Feldgeräte auszulösen (beispielsweise einen Schalter zu öffnen). Das gebildete Steuerkommando wird in eine weitere feldgerätespezifische Nachricht eingebunden, die daraufhin an das betreffende Feldgerät (bzw. die betreffenden Feldgeräte) übermittelt wird. In diesem Fall besitzt die Fernwirkanordnung also eine gewisse eigene Intelligenz zur selbständigen Ausführung von Automatisierungsfunktionen für die Anlage.

Die Fernwirkanordnung kann beispielsweise von demselben Betreiber wie die Anlage betrieben werden. Hierbei wäre quasi die Funktion eines oder mehrerer herkömmlicher Fernwirkgeräte in eine von dem Betreiber der Anlage bereitgestellte Datenverarbeitungs-Cloud verschoben. Beispielsweise könnte es sich dabei um ein Rechenzentrum des Anlagenbetreibers handeln. Gemäß einer anderen Ausführungsform des erfindungsgemäßen Systems kann aber auch vorgesehen sein, dass die Fernwirkanordnung einem anderen Betreiber als dem Betreiber der Anlage zugeordnet ist. Dies kann für den Betreiber der Anlage den Vorteil besitzen, dass er sich um den Betrieb und die Pflege der Fernwirkanordnung nicht selbst kümmern muss, sondern diese Aufgaben dem Betreiber der Datenverarbeitungs-Cloud übertragen hat, die dieser als Dienstleistung anbietet.

Eine weitere vorteilhafte Ausführungsform des erfindungsgemäßen Systems besteht darin, dass die Fernwirkanordnung mehrere voneinander abgetrennte Datenbereiche aufweist, die gegen einen Zugriff aufeinander abgesichert sind, und die Fernwirkanordnung dazu eingerichtet ist, solche Funktionen, die sich auf Feldgeräte und Leitstellenanordnungen unterschiedlicher Anlagen oder unterschiedlicher Betreiber von Anlagen beziehen, in jeweils unterschiedlichen Datenbereichen durchzuführen.

In diesem Fall kann die Datenverarbeitungs-Cloud vorteilhaft für mehrere Anlagen parallel eingesetzt werden; durch die voneinander abgetrennten Datenbereiche lässt sich nämlich leicht eine Trennung von unterschiedlichen Anlagen oder von Anlagen unterschiedlicher Betreiber erreichen. Dabei kann die Datenverarbeitungs-Cloud von einem Betreiber einer Anlage oder von einem Dritten betrieben werden, der einem oder mehreren Betreibern die Funktionalitäten einer Fernwirkanordnung als Dienstleistung anbietet. So kann beispielsweise ein erster Betreiber mehrere Anlagen über in der Datenverarbeitungs-Cloud ausgebildete Fernwirkanordnungen betreiben. Die Fernwirkanordnungen können dabei in demselben Datenbereich oder in unterschiedlichen Datenbereichen der Datenverarbeitungs-Cloud ausgebildet sein. Ein zweiter Betreiber einer Anlage kann seine Anlage ebenfalls über eine in derselben Datenverarbeitungs-Cloud ausgebildete Fernwirkanordnung betreiben; üblicherweise sollte die Fernwirkanordnung für die Anlage des zweiten Betreibers jedoch in einem von demjenigen Datenbereich, in dem die Fernwirkanordnungen des ersten Betreibers ausgebildet sind, verschiedenen Datenbereich ausgebildet sein, um einerseits klar abgegrenzte und sich nicht beeinflussende Automatisierungsfunktionen bereitstellen zu können und andererseits zwischen den beiden Betreibern die nötige Datensicherheit zu gewährleisten.

Eine weitere vorteilhafte Ausführungsform des erfindungsgemäßen Systems sieht vor, dass das System Feldgeräte, die zur Erfassung von den jeweiligen Zustand von Komponenten der Anlage beschreibenden Messwerten und/oder zur Beeinflussung eines jeweiligen Zustands von Komponenten der Anlage ausgebildet sind, und eine Leitstellenanordnung zur Beobachtung und/oder Steuerung der Anlage.

Gemäß einer weiteren vorteilhaften Ausführungsform des erfindungsgemäßen Systems wird in diesem Zusammenhang vorgeschlagen, dass die Feldgeräte Sensoren und/oder Aktoren der Anlage umfassen.

Gemäß einer weiteren vorteilhaften Ausführungsform des erfindungsgemäßen Systems kann vorgesehen sein, dass die Feldgeräte Kommunikationseinrichtungen umfassen. Bei dieser Ausführungsform können die Feldgeräte, z.B. Sensoren und Aktoren mit integrierter Kommunikationseinrichtung, direkt mit einem Kommunikationsmedium zur Kommunikation mit der Fernwirkanordnung verbunden werden.

In diesem Zusammenhang sieht eine vorteilhafte Ausführungsform des erfindungsgemäßen Systems vor, dass die Kommunikationseinrichtungen der Feldgeräte jeweils individuell fest vorgegebene Kommunikationsadressen in einem gemäß dem IPv6-Standard vorgegeben Format aufweisen.

Auf diese Weise kann der durch den IPv6-Standard bereitgestellte erweiterte Adressraum in vorteilhafter Weise genutzt werden. In den letzten 20 Jahren haben das Internet und seine auf dem IP-Standard basierende Kommunikationstechnik immer stärkeren Einzug in technische und wirtschaftliche Prozesse gehalten. Die Kommunikation über das Internet wird zunehmend stärker auch in sensiblen technischen Bereichen akzeptiert. Heute üblich ist der IPv4-Standard als grundlegende Kommunikationsschicht für die Internetkommunikation. Sein Adressraum lässt bis zu 4 Milliarden Adressen zu. Mit der Einführung des neuen Internetprotokollstandards IPv6 können nun bis zu 3,4* 10³⁸ Adressen vergeben werden. Dies ermöglicht das "Internet der Dinge", d.h. jedes Gerät kann mit einer eigenen Internetadresse versehen werden. Aufgrund dieses nahezu unerschöpflichen Vorrats an Internetadressen können technische Geräte schon bei der Produktion mit einer eindeutigen Internetadresse ausgestattet und im Betrieb identifiziert werden. Auch Feldgeräte können so bereits ab Werk mit einer eindeutigen Kommunikationsadresse ausgestattet werden, um die Konfiguration von Anlagen zu vereinfachen (beispielsweise müssen keine dynamischen Adressen zugewiesen werden) und die Erkennbarkeit der Feldgeräte durch die Fernwirkanordnung anhand der festen Adresse zu erhöhen.

Eine weitere vorteilhafte Ausführungsform des erfindungsgemäßen Systems sieht vor, dass zumindest einige der Feldgeräte über einen Kommunikationsbus oder ein kabelgebundenes Kommunikationsnetzwerk unmittelbar oder mittelbar mit der Fernwirkanordnung verbunden sind.

Die Feldgeräte können hierbei beispielsweise auch unter Zwischenschaltung des Internets oder eines Intranets mit der Fernwirkanordnung kommunizieren.

Alternativ dazu kann auch vorgesehen sein, dass in räumlicher Nähe zu zumindest einigen der Feldgeräte eine Kommunikationszugangseinrichtung vorgesehen ist, die zur Durchführung einer drahtlosen Kommunikation mit den zumindest einigen Feldgeräten ausgebildet ist und die mit der Fernwirkanordnung unmittelbar oder mittelbar in Kommunikationsverbindung steht. Auf diese Weise können Feldgeräte, die zur drahtlosen Kommunikation (beispielsweise gemäß WLAN oder WiFi, Zigbee, Bluetooth) eingerichtet sind, ohne aufwendige Verkabelung mit der Fernwirkanordnung verbunden werden. Bei der Kommunikationszugangseinrichtung kann es sich z.B. um einen WLAN-Access-Point oder einen WiFi-Router handeln. Häufig werden solche Kommunikationszugangseinrichtungen auch als "Hot-Spots" bezeichnet.

Sowohl bei drahtgebundenen als auch bei drahtlosen Kommunikationsnetzwerken können zwischen den einzelnen Feldgeräten beispielsweise auch - ohne die Zuhilfenahme einer zentralen Kommunikationsverwaltung - selbständig Ad-Hoc-Netzwerke, d.h. Kommunikationsnetzwerke ohne zentrale Kommunikationsverwaltung, gebildet werden. Dies eignet sich beispielsweise auch im Falle wechselnder Feldgerätekonfigurationen; zusätzliche Feldgeräte können hierbei einfach in ein drahtloses Kommunikationsnetzwerk eingebunden werden, wegfallende Feldgeräte entsprechend einfach aus dem Kommunikationsnetzwerk entfernt werden. Heutzutage verwendete Systeme zur Anlagenautomatisierung verwenden hingegen meist zentral verwaltete Kommunikationssysteme, z.B. Mobilfunk, DSL etc., die nicht für die Bildung von Ad-Hoc-Netzen eingerichtet sind.

Eine weitere vorteilhafte Ausführungsform des erfindungsgemäßen Systems sieht vor, dass die Leitstellenanordnung mit der Fernwirkanordnung mittels eines Kommunikationsnetzwerks unmittelbar oder mittelbar in Verbindung steht.

Bei dem Kommunikationsnetzwerk kann es sich beispielsweise um das Internet oder ein Intranet handeln. Auf diese Weise kann unter Nutzung bekannter IP-Technologien leicht eine Kommunikation zwischen der Fernwirkanordnung und der Leitstellenanordnung durchgeführt werden.

Die Erfindung wird nachfolgend anhand von Ausführungsbeispielen näher erläutert.

Es zeigen
- Figur 1: eine schematische Ansicht eines eine Fernwirkanordnung umfassenden Systems zum Beobachten und/oder Steuern einer Anlage; und
- Figur 2: eine schematische Ansicht einer zum Beobachten und/oder Steuern mehrerer Anlagen ausgebildeten Fernwirkanordnung.

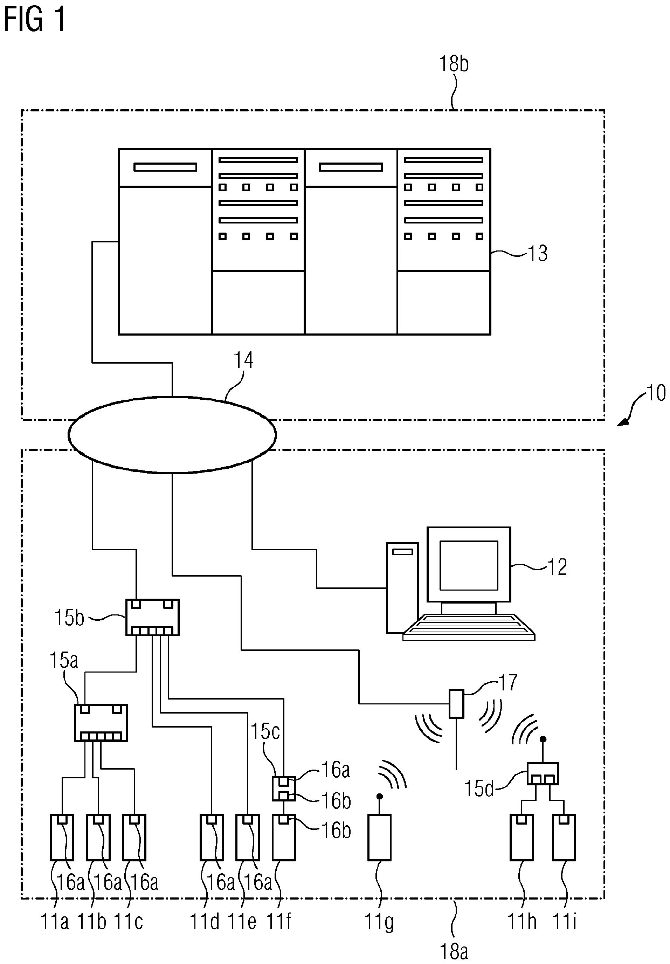

Figur 1 zeigt in schematischer Ansicht ein System 10 zum Beobachten und/oder Steuern einer in Figur 1 der Übersichtlichkeit halber nicht gezeigten Anlage. Bei der Anlage kann es sich beispielsweise um ein elektrisches Energieversorgungsnetz oder eine Schaltstation eines Energieversorgungsnetzes handeln. Eine solche Anlage weist einzelne Komponenten, z.B. Leitungen, Kabel, Schalter, Transformatoren, Generatoren, Motoren, Umrichter, elektrische Lasten, elektrische Energieerzeuger, elektrische Speicher etc., auf, deren Zustand mit Feldgeräten 11a-i durch Aufnahme entsprechender Messwerte erfasst und/oder durch Vornahme bestimmter Aktionen (z.B. Ansteuern eines Schalters) beeinflusst wird. Bei den Feldgeräten 11a-i kann es sich z.B. um Sensoren oder Aktoren oder sogenannte IEDs handeln. Zur Beobachtung und/oder Steuerung der Anlage ist zudem eine Leitstellenanordnung 12 vorgesehen, bei der es sich z.B. um eine oder mehrere Datenverarbeitungseinrichtungen in einer Leitstelle handeln kann. Die Leitstellenanordnung bildet die Schnittstelle zum Bedienpersonal der Anlage und dient zur Auswertung und Anzeige von Betriebszuständen der Anlage und/oder zur Entgegennahme oder selbständigen Erzeugung von Steuerkommandos zur Beeinflussung des Betriebszustandes der Anlage.

Das System 10 umfasst darüber hinaus eine Fernwirkanordnung 13, die sowohl mit der Leitstellenanordnung 12 als auch mit den Feldgeräten 11a-i in Kommunikationsverbindung steht. Die Fernwirkanordnung 13 ist in einer Datenverarbeitungs-Cloud ausgebildet. Die Datenverarbeitungs-Cloud kann beispielsweise von einer Serveranlage oder einem Rechenzentrum bereitgestellt werden. In dem Beispiel gemäß Figur 1 sind die Feldgeräte 11a-i, die Leitstellenanordnung 12 und die Fernwirkanordnung 13 zumindest mittelbar über ein Kommunikationsnetzwerk 14, bei dem es sich z.B. um das Internet handeln kann, verbunden.

Die einzelnen Feldgeräte 11a-i stehen über das Kommunikationsnetzwerk 14 mittelbar mit der Fernwirkanordnung 13 in Verbindung. Konkret sind die Feldgeräte 11a-c mit einem ersten Switch 15a verbunden, der wiederum mit einem zweiten Switch 15b in Verbindung steht. Mit diesem zweiten Switch 15b sind auch die weiteren Feldgeräte 11d-f verbunden, wobei die Feldgeräte 11d und 11e direkt mit dem Switch 15b in Verbindung stehen und das Feldgerät 15f über einen Kommunikationskoppler 15c mit dem Switch 15b verbunden ist. Während nämlich die Feldgeräte 11a-e je eine geeignete Schnittstelle 16a (z.B. eine Ethernet-Schnittstelle) zur direkten Ankopplung an ein mit dem Switch 15a bzw. 15b verbundenes Kommunikationsmedium (z.B. ein Ethernetkabel) umfassen, fehlt dem Feldgerät 11f eine solche Schnittstelle 16a. Stattdessen weist das Feldgerät 11f eine andere Schnittstelle 16b (z.B. eine serielle Schnittstelle) auf. Der Kommunikationskoppler 15c weist eine entsprechende Schnittstelle 16b auf, über die er mit dem Feldgerät 11f in Verbindung steht. Darüber hinaus umfasst der Kommunikationskoppler 15c auch eine zum Anschluss an den Switch 15b geeignete Schnittstelle 16a. Der Kommunikationskoppler dient folglich dazu, das Feldgerät 11f kommunikativ an den Switch 15b anzukoppeln und führt dazu eine entsprechende Kommunikationsumsetzung zwischen den beiden Schnittstellen 16a und 16b durch. Der Switch 15b steht schließlich mit dem Kommunikationsnetzwerk 14 in Verbindung.

Außerdem steht mit dem Kommunikationsnetzwerk 14 eine Kommunikationszugangseinrichtung 17 in Verbindung, die einen Zugangspunkt für drahtlose Kommunikationsverbindungen bereitstellt. Bei der Kommunikationszugangseinrichtung 17 handelt es sich beispielsweise um einen entsprechend für den Betrieb in Anlagenumgebungen ausgebildeten WiFi-Router bzw. einen WLAN-Access Point. Mit der Kommunikationszugangseinrichtung 17 stehen die Feldgeräte 11g-i in Verbindung, wobei das Feldgerät 11g eine eigene Kommunikationseinrichtung zur drahtlosen Kommunikation aufweist und darüber direkt mit der Kommunikationszugangseinrichtung 17 in Verbindung steht. Die Feldgeräte 11h und 11i weisen hingegen keine eigenen Kommunikationseinrichtungen für drahtlose Kommunikation auf und sind stattdessen über Kabelverbindungen mit einem geeigneten Kommunikationskoppler 15d verbunden. Dieser stellt eine Schnittstelle zur drahtlosen Verbindung mit der Kommunikationszugangseinrichtung 17 zur Verfügung.

Die Fernwirkanordnung 13 ist ebenfalls mit dem Kommunikationsnetzwerk 14 verbunden. Diese Verbindung kann unmittelbar oder mittelbar (z.B. über eine DSL-Verbindung) hergestellt sein. Auf diese Weise ist die Fernwirkanordnung 13 auch mit den Feldgeräten 11a-i verbunden. Dazu weist die Fernwirkanordnung 13 eine geeignete Schnittstelle (z.B. eine oder mehrere physikalische Ethernet-Schnittstellen) auf.

Neben der in Figur 1 dargestellten kabelgebundenen oder drahtlosen Verbindung der Feldgeräte 11a-i in Form eines in Baumstruktur ausgebildeten Kommunikationsnetzwerks bzw. mittels einer Kommunikationszugangseinrichtung für drahtlose Kommunikation können auch andere Anschlussmöglichkeiten verwendet werden. Beispielsweise können die einzelnen Feldgeräte 11a-i jeweils direkt, d.h. ohne Zwischenschaltung einer zusätzlichen Kommunikationsstruktur, an das Kommunikationsnetzwerk 14 angeschlossen sein. Auch ist eine direkte Verbindung der einzelnen Feldgeräte 11a-i an die Fernwirkanordnung 13 ist denkbar, sofern diese dafür geeignete Schnittstellen in ausreichender Menge bereitstellt.

Die Leitstellenanordnung 12 ist ebenfalls mit dem Kommunikationsnetzwerk 14 verbunden. Diese Verbindung kann unmittelbar oder mittelbar (z.B. über eine DSL-Verbindung) hergestellt sein. Auf diese Weise ist die Fernwirkanordnung 13 auch mit der Leitstellenanordnung 12 verbunden. Dazu weist die Leitstellenanordnung 12 eine geeignete Schnittstelle (z.B. eine physikalische Ethernet-Schnittstelle) auf.

Zwischen den Feldgeräten 11a-i und der Fernwirkanordnung 13 werden feldgerätespezifische Nachrichten übertragen, die beispielsweise Messwerte von als Sensoren ausgebildeten Feldgeräten oder Steuerkommandos für als Aktoren ausgebildete Feldgeräte beinhalten. Die feldgerätespezifischen Nachrichten können gemäß unterschiedlichen Kommunikationsprotokollen ausgebildet sein, die von den jeweiligen Feldgeräten 11a-i unterstützt werden. Als Transport- bzw. Übermittlungsprotokoll kann beispielsweise TCP/IP gewählt sein, um für die Übermittlung der feldgerätespezifischen Nachrichten verbreitete Internettechnologie einsetzen zu können. Die Feldgeräte können zum Zwecke der Kommunikation beispielsweise individuell fest vorgegebene Kommunikationsadressen, z.B. IP-Adressen nach dem IPv6-Standard, aufweisen.

Zwischen der Fernwirkanordnung 13 und der Leitstellenanordnung 12 werden leitstellenspezifische Nachrichten übertragen, die beispielsweise von der Leitstelle durch Bedienhandlung des Bedienpersonals oder automatisch generierte Steuerkommandos für Feldgeräte 11a-i oder einen Zustand von einer oder mehreren Komponenten der Anlage angebende Werte enthalten. Die leitstellenspezifischen Nachrichten können z.B. gemäß einem Fernwirkprotokoll ausgebildet sein, das von der Leitstelle 12 unterstützt wird. Als Transport- bzw. Übermittlungsprotokoll kann beispielsweise TCP/IP gewählt sein, um auch für die Übermittlung der leitstellenspezifischen Nachrichten verbreitete Internettechnologie einsetzen zu können.

Die Fernwirkanordnung 13 stellt geeignete Schnittstellen und Kommunikationsprotokolle für die Leitstellenanordnung 12 und die Feldgeräte 11a-i zur Verfügung. Da die Fernwirkanordnung 13 nicht in Form eines spezifisch ausgelegten lokalen Fernwirkgerätes, sondern in einer Datenverarbeitungs-Cloud ausgebildet ist, kann durch entsprechende Programmierung der Fernwirkanordnung 13 eine einfache und flexible Anpassung an die jeweils geforderten Kommunikationsprotokolle erfolgen. Anpassungen auf Seiten der Feldgeräte 11a-i bzw. der Leitstellenanordnung 12 sind hingegen nicht erforderlich.

Die Fernwirkanordnung 13 dient einerseits als Kommunikationsgateway, d.h. sie setzt die feldgerätespezifischen Nachrichten in leitstellenspezifische Nachrichten um und umgekehrt. Dabei kann vor einer Weiterleitung an die Leitstellenanordnung 12 auch eine Verdichtung oder anderweitige Verarbeitung der in den feldgerätespezifischen Nachrichten enthaltenen Informationen stattfinden. Darüber hinaus kann die Fernwirkanordnung 13 anhand der in den feldgerätespezifischen Nachrichten enthaltenen Daten auch selbständige Automatisierungsfunktionen wahrnehmen, z.B. bei Überschreitung eines Schwellenwertes selbst eine feldgerätespezifische Nachricht erzeugen und an ein Feldgerät versenden, um eine vorgegebene Steuerhandlung zu bewirken. Zur Durchführung der jeweiligen Funktionen weist die Fernwirkanordnung 13 ein Applikationsmodul mit einer entsprechenden Programmierung auf.

Die Fernwirkanordnung 13 kann beispielsweise außerhalb des in Figur 1 angedeuteten Einflussbereichs 18a des Betreibers der Anlage liegen und stattdessen einem (vom Anlagenbetreiber verschiedenen) Betreiber der Datenverarbeitungs-Cloud zugeordnet sein, dessen Einflussbereich 18b ebenfalls in Figur 1 angedeutet ist. Auf diese Weise kann der Betreiber der Datenverarbeitungs-Cloud die Funktionen der Fernwirkanordnung 13 dem Betreiber der Anlage als Dienstleistung anbieten. Alternativ dazu kann die Datenverarbeitungs-Cloud natürlich auch von demselben Betreiber betrieben werden wie die Anlage.

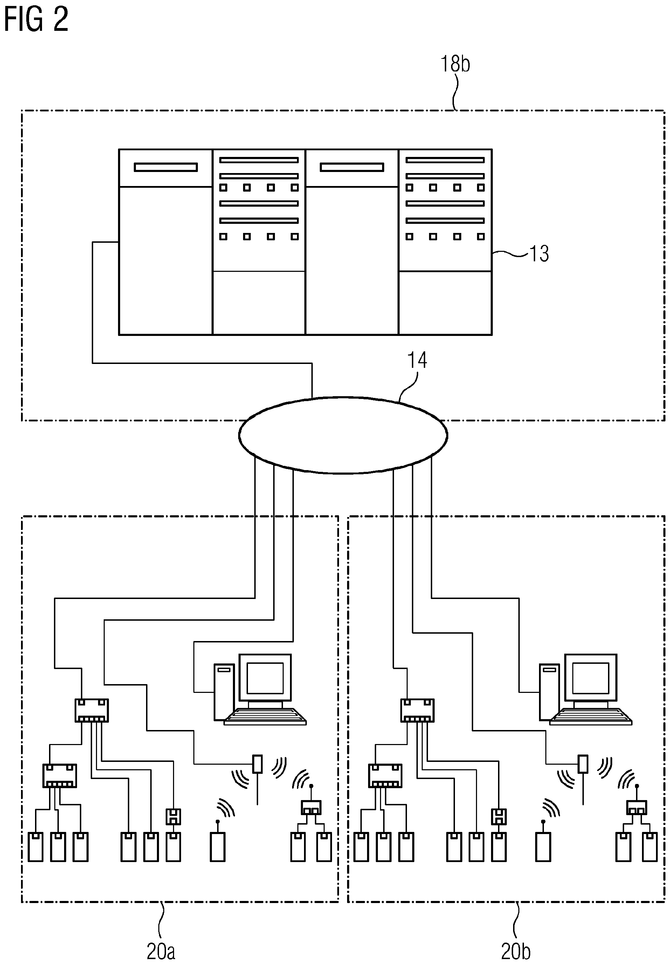

Figur 2 zeigt ein weiteres Ausführungsbeispiel einer Fernwirkanordnung 13. Die generelle Funktionsweise der Fernwirkanordnung 13 sowie ihre Kommunikationsverbindungen mit Feldgeräten und Leitstellenanordnungen entsprechen der bereits zu Figur 1 erläuterten Funktionsweise. Die Datenverarbeitungs-Cloud steht in dem Ausführungsbeispiel gemäß Figur 2 jedoch mit zwei Anlagen 20a und 20b in Verbindung. Die in der Datenverarbeitungs-Cloud ausgebildete Fernwirkanordnung 13 weist daher zwei voneinander getrennte Datenbereiche auf, die gegeneinander hinsichtlich jeglicher Zugriffe abgesichert sind, so dass beispielsweise keine Schreib- und Lesezugriffe zwischen den einzelnen Datenbereichen stattfinden können. Darüber hinaus können die in den unterschiedlichen Datenbereichen vorliegenden Daten mit unterschiedlichen Schlüsseln verschlüsselt sein, um die Datensicherheit weiter zu erhöhen. Die Fernwirkanordnung 13 ist in dieser Ausführungsform derart ausgebildet, dass die für die beiden Anlagen jeweils bereitgestellten Funktionalitäten und durchgeführten Handlungen jeweils nur in einem der betreffenden Anlage oder dem Betreiber der betreffenden Anlage zugeordneten Datenbereich ausgeführt werden. Somit kann die Fernwirkanordnung 13 parallel Dienste für mehr als eine Anlage anbieten und ausführen. Die Anlagen 20a und 20b können hierbei von demselben oder von unterschiedlichen Anlagenbetreibern betrieben werden. Die Datenverarbeitungs-Cloud kann von einem der Anlagenbetreiber oder einem Dritten betrieben werden.

Selbstverständlich ist die Fernwirkanordnung 13 nicht auf den Betrieb für bis zu zwei Anlagen eingeschränkt; vielmehr können beliebige viele Anlagen an die Fernwirkanordnung 13 angeschlossen sein, sofern die von der Datenverarbeitungs-Cloud bereitgestellte Leistung dies zulässt.

## Patentansprüche

1. System (10) zum Beobachten und/oder Steuern einer Anlage, wobei das System mit einer Fernwirkanordnung (13), mit Feldgeräten (lla-i) der Anlage und mit einer Leitstellenanordnung (12) eingerichtet ist;
**dadurch gekennzeichnet, dass**
- die Fernwirkanordnung (13) in einer Datenverarbeitungs-Cloud ausgebildet ist, wobei
- die Fernwirkanordnung (13) dazu ausgebildet ist, mit den Feldgeräten (lla-i) feldgerätespezifische Nachrichten und mit der Leitstellenanordnung (12) leitstellenspezifische Nachrichten auszutauschen; und
- die Fernwirkanordnung (13) dazu ausgebildet ist, von den Feldgeräten (lla-i) empfangene feldgerätespezifische Nachrichten in leitstellenspezifische Nachrichten umzusetzen und an die Leitstellenanordnung (12) zu übertragen, und von der Leitstellenanordnung (12) empfangene leitstellenspezifische Nachrichten in feldgerätespezifische Nachrichten umzusetzen und an die Feldgeräte (lla-i) zu übertragen.

2. System (10) nach Anspruch 1,
**dadurch gekennzeichnet, dass**
- die Fernwirkanordnung (13) dazu ausgebildet ist, mit den Feldgeräten (lla-i) die feldgerätespezifischen Nachrichten gemäß zumindest einem ersten Kommunikationsprotokoll, das von den Feldgeräten (lla-i) unterstützt wird, und mit der Leitstellenanordnung (12) die leitstellenspezifischen Nachrichten gemäß einem zweiten Kommunikationsprotokoll, das von der Leitstellenanordnung (12) unterstützt wird, auszutauschen.

3. System (10) nach einem der vorangehenden Ansprüche,
**dadurch gekennzeichnet, dass**
- die Fernwirkanordnung (13) eine gemeinsame Kommunikationsschnittstelle sowohl für die Kommunikation mit den Feldgeräten (lla-i) als auch für die Kommunikation mit der Leitstellenanordnung (12) aufweist.

4. System (10) nach Anspruch 2 oder 3,
**dadurch gekennzeichnet, dass**
- das zumindest eine erste Kommunikationsprotokoll auf einem IP-basierten Übermittlung-Kommunikationsprotokoll aufsetzt; und
- die Fernwirkanordnung (13) dazu ausgebildet ist, die Kommunikation mit den Feldgeräten (lla-i) über den Feldgeräten (lla-i) jeweils individuell fest vorgegebene Kommunikationsadressen vorzunehmen.

5. System (10) nach einem der Ansprüche 2 bis 4,
**dadurch gekennzeichnet, dass**
- das zweite Kommunikationsprotokoll ein Fernwirkprotokoll ist.

6. System (10) nach einem der vorangehenden Ansprüche,
**dadurch gekennzeichnet, dass**
- die Fernwirkanordnung (13) ein Applikationsmodul aufweist, das zur Verarbeitung von empfangenen feldgerätespezifischen Nachrichten gemäß vorgegebenen Regeln und zur Bildung von leitstellenspezifischen Nachrichten und/oder weiteren feldgerätespezifischen Nachrichten mit einem von einem Ergebnis der Verarbeitung abhängigen Inhalt eingerichtet ist.

7. System (10) nach einem der vorangehenden Ansprüche,
**dadurch gekennzeichnet, dass**
- die Fernwirkanordnung (13) einem anderen Betreiber als dem Betreiber der Anlage zugeordnet ist.

8. System (10) nach einem der vorangehenden Ansprüche,
**dadurch gekennzeichnet, dass**
- die Fernwirkanordnung (13) mehrere voneinander abgetrennte Datenbereiche aufweist, die gegen einen Zugriff aufeinander abgesichert sind; und
- die Fernwirkanordnung (13) dazu eingerichtet ist, solche Funktionen, die sich auf Feldgeräte (lla-i) und Leitstellenanordnungen (12) unterschiedlicher Anlagen oder unterschiedlieher Betreiber von Anlagen beziehen, in jeweils unterschiedlichen Datenbereichen durchzuführen.

9. System (10) nach einem der vorangehenden Ansprüche,
- Feldgeräten (11a-i), die zur Erfassung von den jeweiligen Zustand von Komponenten der Anlage beschreibenden Messwerten und/oder zur Beeinflussung eines jeweiligen Zustands von Komponenten der Anlage ausgebildet sind;
- einer Leitstellenanordnung (12) zur Beobachtung und/oder Steuerung der Anlage.

10. System (10) nach Anspruch 9,
**dadurch gekennzeichnet, dass**
- die Feldgeräte (lla-i) Sensoren und/oder Aktoren der Anlage umfassen.

11. System (10) nach Anspruch 9 oder 10,
**dadurch gekennzeichnet, dass**
- die Feldgeräte (lla-i) Kommunikationseinrichtungen umfassen.

12. System (10) nach Anspruch 11,
**dadurch gekennzeichnet, dass**
- die Kommunikationseinrichtungen der Feldgeräte (lla-i) jeweils individuell fest vorgegebene Kommunikationsadressen in einem gemäß dem IPv6-Standard vorgegeben Format aufweisen.

13. System (10) nach einem der Ansprüche 9 bis 12,
**dadurch gekennzeichnet, dass**
- zumindest einige der Feldgeräte (lla-i) über einen Kommunikationsbus oder ein kabelgebundenes Kommunikationsnetzwerk unmittelbar oder mittelbar mit der Fernwirkanordnung (13) verbunden sind.

14. System (10) nach einem der Ansprüche 9 bis 12,
**dadurch gekennzeichnet, dass**
- in räumlicher Nähe zu zumindest einigen der Feldgeräte (lla-i) eine Kommunikationszugangseinrichtung (17) vorgesehen ist, die zur Durchführung einer drahtlosen Kommunikation mit den zumindest einigen Feldgeräten (lla-i) ausgebildet ist und die mit der Fernwirkanordnung (13) unmittelbar oder mittelbar in Kommunikationsverbindung steht.

15. System nach einem der Ansprüche 9 bis 14,
**dadurch gekennzeichnet, dass**
- die Leitstellenanordnung (12) mit der Fernwirkanordnung (13) mittels eines Kommunikationsnetzwerks (14) unmittelbar oder mittelbar in Verbindung steht.

## Claims

1. System (10) for observing and/or controlling an installation, having a telecontrol arrangement (13) which is set up to communicate with field devices (lla-i) of the installation and with a control center arrangement (12); **characterized in that**
- the telecontrol arrangement (13) is formed in a data processing cloud, wherein
- the telecontrol arrangement (13) is designed to interchange field-device-specific messages with the field devices (lla-i) and to interchange control-center-specific messages with the control center arrangement (12); and
- the telecontrol arrangement (13) is designed to convert field-device-specific messages received from the field devices (lla-i) into control-center-specific messages and to transmit them to the control center arrangement (12) and to convert control-center-specific messages received from the control center arrangement (12) into field-device-specific messages and to transmit them to the field devices (11a-i).

2. System (10) according to Claim 1,
**characterized in that**
- the telecontrol arrangement (13) is designed to interchange the field-device-specific messages with the field devices (lla-i) according to at least one first communication protocol supported by the field devices (lla-i) and to interchange the control-center-specific messages with the control center arrangement (12) according to a second communication protocol supported by the control center arrangement (12).

3. System (10) according to one of the preceding claims, **characterized in that**
- the telecontrol arrangement (13) has a common communication interface both for communicating with the field devices (11a-i) and for communicating with the control center arrangement (12) .

4. System (10) according to Claim 2 or 3,
**characterized in that**
- the at least one first communication protocol is based on an IP-based transmission communication protocol; and
- the telecontrol arrangement (13) is designed to communicate with the field devices (lla-i) using communication addresses which are individually permanently predefined for each of the field devices (11a-i).

5. System (10) according to one of Claims 2 to 4, **characterized in that**
- the second communication protocol is a telecontrol protocol.

6. System (10) according to one of the preceding claims, **characterized in that**
- the telecontrol arrangement (13) has an application module which is set up to process received field-device-specific messages according to predefined rules and to form control-center-specific messages and/or further field-device-specific messages with a content dependent on a result of the processing.

7. System (10) according to one of the preceding claims, **characterized in that**
- the telecontrol arrangement (13) is assigned to an operator other than the operator of the installation.

8. System (10) according to one of the preceding claims, **characterized in that**
- the telecontrol arrangement (13) has a plurality of data areas which are separated from one another and are protected from access to one another; and
- the telecontrol arrangement (13) is set up to carry out those functions which relate to field devices (lla-i) and control center arrangements (12) of different installations or different operators of installations in respectively different data areas.

9. System (10) according to one of the preceding claims,
- field devices (lla-i) which are designed to record measured values describing the respective state of components of the installation and/or to influence a respective state of components of the installation;
- a control center arrangement (12) for observing and/or controlling the installation.

10. System (10) according to Claim 9,
**characterized in that**
- the field devices (lla-i) comprise sensors and/or actuators of the installation.

11. System (10) according to Claim 9 or 10,
**characterized in that**
- the field devices (lla-i) comprise communication devices.

12. System (10) according to Claim 11,
**characterized in that**
- the communication devices of the field devices (lla-i) each have individually permanently predefined communication addresses in a format predefined according to the IPv6 standard.

13. System (10) according to one of Claims 9 to 12, **characterized in that**
- at least some of the field devices (lla-i) are connected directly or indirectly to the telecontrol arrangement (13) via a communication bus or a wired communication network.

14. System (10) according to one of Claims 9 to 12, **characterized in that**
- a communication access device (17) is provided in the spatial vicinity of at least some of the field devices (11a-i), which communication access device is designed to wirelessly communicate with the at least some field devices (lla-i) and has a direct or indirect communication connection to the telecontrol arrangement (13).

15. System according to one of Claims 9 to 14,
**characterized in that**
- the control center arrangement (12) is directly or indirectly connected to the telecontrol arrangement (13) by means of a communication network (14).

## Revendications

1. Système (10) d'observation et/ou de commande d'une installation,
dans lequel le système est agencé avec un agencement (13) d'action à distance, avec des appareils (11a-i) sur site de l'installation et avec un agencement (12) de poste de commande ;
**caractérisé en ce que**
- l'agencement (13) d'action à distance est constitué en un nuage de traitement de données, dans lequel
- l'agencement (13) d'action à distance est constitué pour échanger avec les appareils (11a-i) sur site des messages spécifiques aux appareils sur site et avec l'agencement (12) de poste de commande des messages spécifiques au poste de commande ; et
- l'agencement (13) d'action à distance est constitué pour transformer des messages spécifiques aux appareils sur site reçus des appareils (11a-i) sur site en des messages spécifiques au poste de commande et les transmettre à l'agencement (12) de poste de commande et des messages spécifiques au poste de commande reçus de l'agencement (12) de poste de commande en des messages spécifiques aux appareils sur site et les transmettre aux appareils (11a-i) sur site.

2. Système (10) suivant la revendication 1,
**caractérisé en ce que**
- l'agencement (13) d'action à distance est constitué pour échanger avec les appareils (11a-i) sur site les messages spécifiques aux appareils sur site suivant au moins un premier protocole de communication, qui est assisté par les appareils (11a-i) sur site, et avec l'agencement (12) de poste de commande les messages spécifiques au poste de commande suivant un deuxième protocole de communication, qui est assisté par l'agencement (12) de poste de commande.

3. Système (10) suivant l'une des revendications précédentes,
**caractérisé en ce que**
- l'agencement (13) d'action à distance a une interface de communication commune, à la fois pour la communication avec les appareils (11a-i) sur site et pour la communication avec l'agencement (12) de poste de commande.

4. Système (10) suivant la revendication 2 ou 3, **caractérisé en ce que**
- le au moins un premier protocole de communication s'applique à un protocole de communication de transmission reposant sur IP ; et
- l'agencement (13) d'action à distance est constitué pour effectuer la communication avec les appareils (11a-i) sur site par des adresses de communication données à l'avance de manière fixe et individuellement.

5. Système (10) suivant l'une des revendications 2 à 4, **caractérisé en ce que**
- le deuxième protocole de communication est un protocole d'action à distance.

6. Système (10) suivant l'une des revendications précédentes,
**caractérisé en ce que**
- l'agencement (13) d'action à distance a un module d'application, qui est agencé pour traiter des messages reçus spécifiques aux appareils sur site suivant des règles données à l'avance et pour former des messages spécifiques au poste de commande et/ou d'autres messages spécifiques aux appareils sur site ayant un contenu, qui dépend d'un résultat du traitement.

7. Système (10) suivant l'une des revendications précédentes,
**caractérisé en ce que**
- l'agencement (13) d'action à distance est affecté à un autre exploitant que l'exploitant de l'installation.

8. Système (10) suivant l'une des revendications précédentes,
**caractérisé en ce que**
- l'agencement (13) d'action à distance a plusieurs parties de données séparées les unes des autres, qui sont sécurisées les unes par rapport aux autres vis-à-vis d'un accès ; et
- l'agencement (13) d'action à distance est agencé pour effectuer, dans des parties de données différentes, les fonctions, qui se rapportent à des appareils (11a-i) sur site et à des agencements (12) de poste de commande d'installations différentes ou d'exploitants d'installation différents.

9. Système (10) suivant l'une des revendications précédentes, comprenant
- des appareils (11a-i) sur site, constitués pour détecter des valeurs de mesure décrivant l'état respectif de composants de l'installation et/ou pour influencer un état respectif de composants de l'installation ;
- un agencement (12) de poste de commande pour observer et/ou commander l'installation.

10. Système (10) suivant la revendication 9,
**caractérisé en ce que**
- les appareils (11a-i) sur site comprennent de capteurs et/ou des actionneurs de l'installation.

11. Système (10) suivant la revendication 9 ou 10, **caractérisé en ce que**
- les appareils (11a-i) sur site comprennent des dispositifs de communication.

12. Système (10) suivant la revendication 11,
**caractérisé en ce que**
- les dispositifs de communication des appareils (11a-i) sur site ont chacun des adresses de communication données à l'avance de manière fixe individuellement suivant le format donné à l'avance de la norme IPv6.

13. Système (10) suivant l'une des revendications 9 à 12, **caractérisé en ce que**
- au moins certains des appareils (11a-i) sur site sont reliés par un bus de communication ou par un réseau de communication par câble, directement ou indirectement, à l'agencement (13) d'action à distance.

14. Système (10) suivant l'une des revendications 9 à 12, **caractérisé en ce que**
- dans l'espace proche d'au moins certains des appareils (11a-i) sur site est prévu un dispositif (17) d'accès à la communication, qui est constitué pour effectuer une communication sans fil avec les au moins certains appareils (11a-i) sur site et qui est en liaison de communication, directement ou indirectement, avec l'agencement (13) d'action à distance.

15. Système suivant l'une des revendications 9 à 14, **caractérisé en ce que**
- l'agencement (12) de poste de commande est en liaison, directement ou indirectement, avec l'agencement (13) d'action à distance, au moyen d'un réseau (14) de communication.
